(19) Europäisches Patentamt
European Patent Office
Office européen des brevets

(11) Veröffentlichungsnummer: **0 332 994 B1**

(12) **EUROPÄISCHE PATENTSCHRIFT**

(45) Veröffentlichungstag der Patentschrift: **24.02.93**

(51) Int. Cl.$^5$: **C08L 51/04**, C08L 55/02, //(C08L51/04,25:12,69:00), (C08L55/02,25:12,69:00)

(21) Anmeldenummer: **89103975.2**

(22) Anmeldetag: **07.03.89**

(54) **Polymermischungen mit hoher Zugfestigkeit und guter Weiterreissfestigkeit.**

(30) Priorität: **17.03.88 DE 3808843**

(43) Veröffentlichungstag der Anmeldung:
**20.09.89 Patentblatt 89/38**

(45) Bekanntmachung des Hinweises auf die Patenterteilung:
**24.02.93 Patentblatt 93/08**

(84) Benannte Vertragsstaaten:
**DE FR GB IT**

(56) Entgegenhaltungen:
**EP-A- 0 222 234**

(73) Patentinhaber: **BAYER AG**

**W-5090 Leverkusen 1 Bayerwerk(DE)**

(72) Erfinder: **Eichenauer, Herbert, Dr.**
**Gustav-Heinemann-Strasse 3**
**W-4047 Dormagen 1(DE)**
Erfinder: **Leitz, Edgar, Dr.**
**Goethestrasse 63**
**W-4047 Dormagen 1(DE)**
Erfinder: **Ott, Karl-Heinz, Dr.**
**Paul-Klee-Strasse 54**
**W-5090 Leverkusen(DE)**
Erfinder: **Lindner, Christian, Dr.**
**Riehler Strasse 200**
**W-5000 Köln 60(DE)**
Erfinder: **Meier, Lothar, Dr.**
**Buchenstrasse 31 b**
**W-4222 Sprockhoevel(DE)**
Erfinder: **Billinger, Otto, Dipl.-Ing.**
**Birkenstrasse 13**
**W-5460 Linz/Rhein(DE)**

EP 0 332 994 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft weiche kautschukartige flexible Polymermischungen mit guter thermoplastischer Verarbeitbarkeit ohne Anwendung für Kautschuke typischer Verarbeitungsschritte wie Vulkanisation bei der Formgebung.

Flexible Polymerlegierungen auf der Basis von Pfropfkautschuken sind bekannt (vgl. z.B. EP-A 0 122 516). Ein Nachteil dieser Mischungen ist jedoch die meist ungenügende Zugfestigkeit und Weiterreißfestigkeit.

Es wurde nun gefunden, daß durch Zusatz eines speziellen Copolymeren mit sequenzartigem Bau (I) Polymermischungen mit ausgezeichneten, für den jeweiligen Verwendungszweck einstellbaren Eigenschaftskombinationen erhalten werden. Die Mischungen besitzen eine sehr gute thermoplastische Verarbeitbarkeit, gute Lösungsmittelbeständigkeit und hohes Haftvermögen an anderen Kunststoffen.

Gegenstand der Erfindung sind Polymermischungen mit hoher Zugfestigkeit und guter Weiterreißfestigkeit enthaltend

A) 10-95 Gew.-Teile, vorzugsweise 20 bis 90 Gew.-Teile, eines Pfropfpolymerisats aus 40 bis 85 Gew.-%, vorzugsweise 45 bis 80 Gew.-%, eines teilchenförmigen hochvernetzten Dien- oder Alkylacrylatkautschuks und 60 bis 15 Gew.-%, vorzugsweise 55 bis 20 Gew.-%, darauf pfropfpolymerisierter Alkylacrylate, Alkylmethacrylate, Acrylnitril, Methacrylnitril, Styrol, kernsubstituiertes Styrol, $\alpha$-Methylstyrol Maleinsäureanhydrid, N-Substituiertem Maleinimid, Vinylacetat oder Mischungen daraus,

B) 0 bis 75 Gew.-Teile, vorzugsweise 5 bis 70 Gew.-Teile, eines thermoplastischen Polymerisats von Alkylacrylaten, Alkylmethacrylaten, Acrylnitril, Methacrylnitril, Styrol, $\alpha$-Methylstyrol oder Mischungen daraus,

C) 5 bis 60 Gew.-Teile, vorzugsweise 5 bis 50 Gew.-Teile, eines Copolymeren mit sequenzartigem Aufbau der idealisierten Formel (I)

$$(A - X - B)_n \qquad (I)$$

mit n = 1 bis 20, Vorzugsweise 1 bis 10, wobei A = Polymerisat eines cyclischen Carbonats der Formel (II) ("Block A")

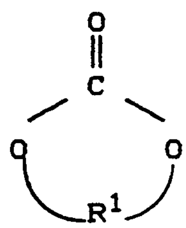

(II)

mit

$R^1$ = $-(CH_2)_n-$ mit n = 3-12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

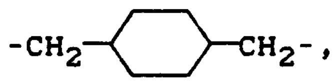

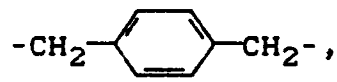

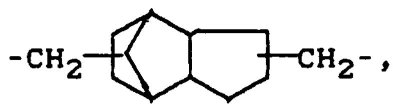

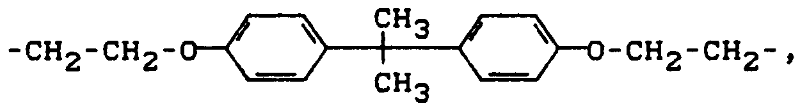

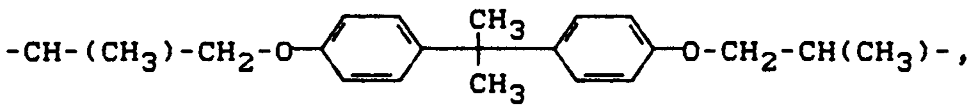

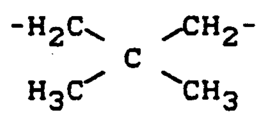

,

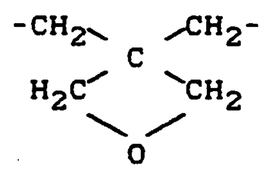

,

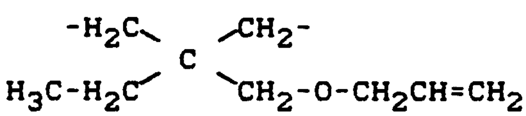

,

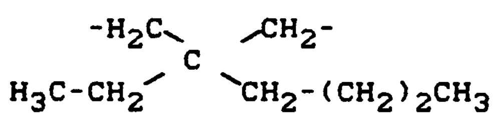

oder der Formel (III)

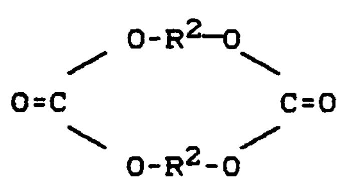

(III)

worin

$R^2$ = $-(CH_2)_n$ mit n = 4-12
$-CH_2CH_2OCH_2CH_2-$
$-CH_2CH_2OCH_2CH_2OCH_2CH_2-$

B = Polymerisat eines cyclischen Esters mit der Formel (IV) ("Block B")

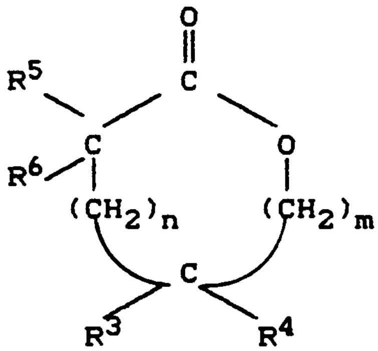

(IV)

$R^3$, $R^4$, $R^5$, $R^6$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und

m, n unabhängig voneinander 0, 1, 2, 3, 4 5 oder 6,

X = Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung auf -B- und die Konzentration der Struktureinheiten aus den Verbindungen (IV) in Richtung auf -A- kontinuierlich abnimmt ("tapered structure") und wobei der Gehalt an Blöcken A 1 bis 45 Gew.-%, vorzugsweise 2,5 bis 30 Gew.-% (jeweils bezogen auf Gesamtmenge der Blöcke A+B), der Gehalt an Blöcken B 99 bis 55 Gew.-%, vorzugsweise 97,5 bis 70 Gew.-% (jeweils bezogen auf Gesamtmenge der Blöcke A+B), und der Gehalt an Mittelstücken X 5 bis 95 Gew.-%, vorzugsweise 10 bis 80 Gew.-% (jeweils bezogen auf Gesamtmenge A+B+X) beträgt.

Pfropfpolymerisate A) sind vorzugweise teilchenförmige Emulsionspolymerisate. Sie bestehen aus einem teilchenförmigen Dienkautschuk oder Alkylacrylatkautschuk mit einem Gelgehalt von vorzugsweise größer 70 Gew.-% und mittleren Teilchendurchmessern ($d_{50}$ ermittelt durch Ultrazentrifugenmessungen nach W. Scholtan et at., Kolloid-Z. u.Z. Polymere 250 (1972), 782-795) von 0,05 bis 2,0 µm, vorzugsweise 0,1 bis 0,8 µm, (Pfropfgrundlage) und einem darauf pfropfpolymerisierten Polymerisat von Alkylacrylaten (oder Methacrylaten) wie Methylmethacrylat, Styrol, $\alpha$-Methylstyrol, kernsubstituiertem Styrol wie p-Methylstyrol, Acrylnitril, Methacrylnitril, Maleinsäureanhydrid, N-substituiertes Maleinimid, Vinylacetat, oder Mischungen daraus (Pfropfauflage).

Dienkautschuke sind Polybutadien, Polyisopren und Copolymerisate von Butadien mit bis zu 35 Gew.-% Comonomeren wie Styrol, Acrylnitril, Methylmethacrylat, $C_1$-$C_6$-Alkylacrylat, die durch wäßrige radikalische Emulsionspolymerisation erzeugt werden. Acrylatkautschuke sind vernetzte teilchenförmige Emulsionscopolymerisate aus im wesentlichen $C_1$-$C_8$-Alkylacrylat, insbesondere $C_2$-$C_6$-Alkylacrylat, gegebenenfalls in Mischung mit bis zu 15 Gew.-% Comonomeren wie Styrol, Methylmethacrylat, Butadien, Vinylmethylether, Acrylnitril und gegebenenfalls bis zu 5 Gew.-% eines polyfunktionellen vernetzenden Comonomeren, z.B. Divinylbenzol, Glykol-bisacrylate, Bisacrylamide, Phosphorsäure-, Zitronensäuretrisallylester, Allylester von Acrylsäure oder Methacrylsäure, Triallylcyanurat, Triallylisocyanurat. Geeignet sind auch Gemische von Dien- und Alkylacrylatkautschuken sowie Kautschuke mit einer Kern-Mantel-Struktur, z.B. mit einem Kern aus Dienkautschuk und einem Mantel aus Acrylatkautschuk oder umgekehrt. Kern-Mantel-Kautschuke sind bevorzugt.

Bevorzugte Pfropfauflagen sind Copolymerisate aus Styrol und Acrylnitril, Copolymerisate aus $\alpha$-Methylstyrol und Acrylnitril und Methylmethacrylatpolymerisate sowie Copolymerisate mit bis zu 50 Gew.-% $C_1$-$C_6$-Alkylacrylaten, Acrylnitril oder Styrol.

Die Pfropfpolymerisate A) werden hergestellt, indem man zunächst durch Emulsionspolymerisation eine Emulsion der Kautschukteilchen erzeugt und dann in deren Anwesenheit Monomere radikalisch pfropfpolymerisiert, so daß wenigstens ein Teil des gebildeten Polymerisats chemisch an den Kautschuk gebunden wird.

Thermoplastische Polymerisate B) sind harzartige thermoplastische kautschukfreie Polymerisate aus Styrol, $\alpha$-Methylstyrol, kernsubstituiertem Styrol, z.B. p-Methylstyrol, Methylacrylat, Methylmethacrylat, Acrylnitril, Methacrylnitril, Maleinsäureanhydrid, N-substituiertem Maleinimid, Vinylacetat oder Mischungen daraus. Bevorzugt sind Styrol/Acrylnitril-Copolymerisate, $\alpha$-Methylstyrol/Acrylnitril-Copolymerisate und Methylmethacrylat/Acrylnitril-Copolymerisate.

Die thermoplastischen Polymerisate B) sind bekannt und lassen sich durch radikalische Polymerisation, insbesondere durch Emulsions-, Suspensions-, Lösungs- und Massepolymerisation herstellen. Sie besitzen vorzugsweise Molekulargewichte $\overline{M}_w$ von 20 000 bis 200 000 und Grenzviskositäten $[\eta]$ von 20 bis 110 ml/g (gemessen in Dimethylformamid bei 25 ° C).

Copolymere mit sequenzartigem Aufbau C) sind Copolymere der idealisierten Formel (I)

$(A - X - B)_n$ (I)

mit

n = 1 bis 20, insbesondere 1 bis 10, worin

- A - = Polymerisat eines cyclischen Carbonats der Formel (II) ("Block A")

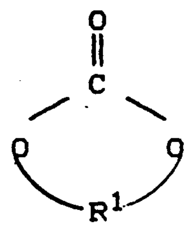

(II)

worin

$R^1$ = $-(CH_2)_n-$ mit n = 3-12
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

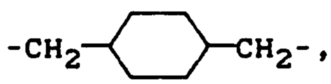 , 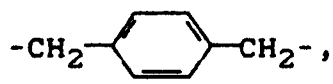 ,

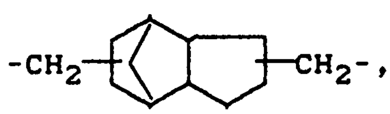 ,

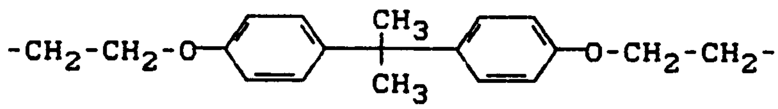,

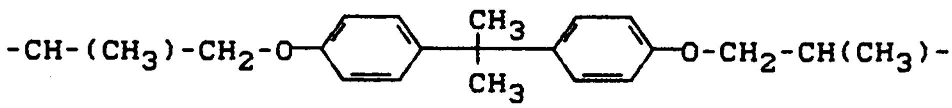,

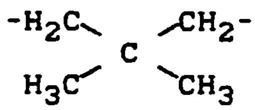, 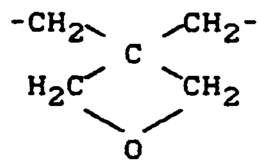,

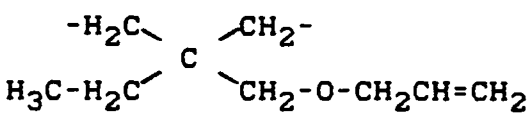, 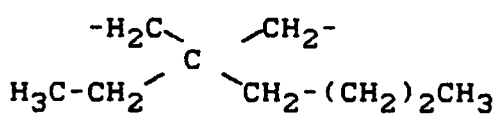

oder der Formel (III)

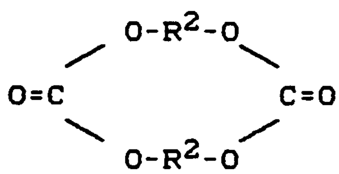 (III)

worin

R2 = $-(CH_2)_n$ mit n = 4-12
$-CH_2CH_2OCH_2CH_2-$
$-CH_2CH_2OCH_2CH_2OCH_2CH_2-$

-B- = Polymerisat eines cyclischen Esters mit der Formel (IV) ("Block B")

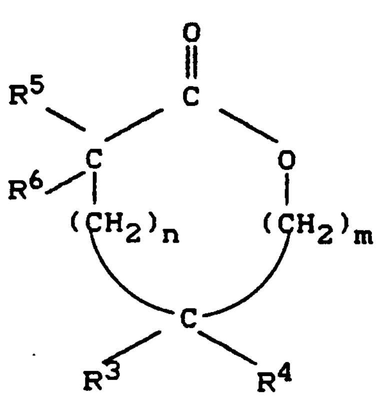 (IV)

mit

| | |
|---|---|
| $R^3$, $R^4$, $R^5$, $R^6$ = | H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und |
| m, n | unabhängig voneinander 0, 1, 2, 3, 4, 5 oder 6, |
| X = | Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung aus -B- und die Konzentration der Struktureinheiten aus den Verbindungen (IV) in Richtung auf -A-kontinuierlich abnimmt ("tapered structure"), bedeutet. |

Der Gehalt an Blöcken A im Sequenz-Copolymerisat C) beträgt 1 bis 45 Gew.-%, vorzugsweise 2,5 bis 30 Gew.-% (jeweils bezogen auf Gesamtmenge der Blöcke A + B), der Gehalt an Blöcken B 99 bis 55 Gew.-%, vorzugsweise 97,5 bis 70 Gew.-% (jeweils bezogen auf Gesamtmenge der Blöcke A + B), und der Gehalt an Mittelstücken X 5 bis 95 Gew.-%, vorzugsweise 10 bis 80 Gew.-% (jeweils bezogen auf Gesamtmenge A + B + X).

Die mittleren Molekulargewichte der Blöcke A und B sind 500 bis 1 000 000, vorzugsweise 1000 bis 500 000 und besonders bevorzugt 2000 bis 250 000; die mittleren Molekulargewichte der Mittelstücke X 300 bis 20 000, vorzugsweise 500 bis 15 000.

Bevorzugte cyclische Carbonate der Formeln (II) und (III) sind Trimethylenglykolcarbonat, Neopentylglykolcarbonat, 1,4-Butandiolcarbonat sowie dimere Carbonate des Pentandiols oder des Hexandiols. Besonders bevorzugt ist Neopentylglykolcarbonat. Bevorzugte Lactone der Formel (IV) sind $\epsilon$-Caprolacton und Pivalolacton.

Die Sequenz-Copolymeren C) lassen sich aus den cyclischen Carbonaten (II, III) und Lactonen (IV) durch anionische ringöffnende Lösungspolymerisation herstellen. Ein sequentieller Aufbau der Copolymeren wird durch eine stufenweise Zugabe der Carbonat/Lacton-Mischung zur polymerisationsaktiven Lösung erreicht.

Bevorzugte Copolymere mit sequenzartigem Aufbau C) sind die gemäß DE-OS 37 00 193 erhaltenen Produkte mit Molekulargewichten $\overline{M}_w$ im Bereich von 2000 bis 500 000, bevorzugt 5000 bis 400 000.

Die erfindungsgemäßen Mischungen enthaltend A), B) und C), können gegebenenfalls die üblichen Zusatzstoffe wie Flammschutzmittel, Gleitmittel, Stabilisatoren, Pigmente, Entformungsmittel, Antistatika enthalten.

Die Herstellung der Polymermischungen kann auf übliche Weise erfolgen, z.B. indem das aus seiner Emulsion durch übliche Koagulationsverfahren oder Direkttrocknungsverfahren (Sprühtrocknung) isolierte und gereinigte Pfropfpolymerisat A) auf bekannten Compoundieraggregaten (Kneter, Schnecken, Walzen) mit dem thermoplastischen Polymerisat B) und dem Sequenz-Copolymer C) sowie gegebenenfalls Additiven der oben genannten Art vermischt wird.

Formmassen aus den erfindungsgemäßen Polymermischungen besitzen viele Eigenschaften üblicher Kautschuke und thermoplastischer Elastomere; hervorzuheben ist ihre besonders günstige Kombination von hoher Zugfestigkeit und guter Weiterreißfestigkeit. Durch geeignete Wahl der relativen Menge von A), B) und C) und insbesondere der Zusammensetzung des Sequenz-Copolymerisats C) lassen sich diese mechanischen Eigenschaften variieren und die Härte modifizieren. Im Vergleich zu bekannten Formmassen mit elastoplastischen Eigenschaften besitzen die Formmassen sehr geringe Anteile an flüchtigen oder migrierenden Verunreinigungen. Hervorzuheben ist ihre gute Lösungsmittelbeständigkeit.

Die Formmassen eignen sich insbesondere zur Herstellung von Beschichtungen, Dichtungsmassen, Kabelmassen, Folien, Dämpfungsmaterialien und Gummiartikeln wie Schläuchen.

## Beispiele

### Pfropfpolymerisat A)

Pfropfprodukt erhalten durch Emusionspolymerisation von 50 Gew.-% eines Styrol/Acrylnitril-Gemisches (Gew.-Verhältnis 72:28) auf 50 Gew.-% teilchenförmiges Polybutadien mit einem mittleren Teilchendurchmesser ($d_{50}$) von 0,4 $\mu$m.

### Thermoplastisches Copolymerisat - B)

Statistisches Styrol/Acrylnitril - Copolymerisat (Gewichtsverhältnis Styrol: Acrylnitril = 72:28) mit einem mittleren Molekulargewicht $\overline{M}_w$ von ca. 95 000 und einer Uneinheitlichkeit $\overline{M}_w/M_n \leqq 2,0$.

Sequenziert aufgebautes Copolymer C)

C 1: Sequenziert aufgebautes Copolymerisat vom Typ A-X-B, wobei A Polyneopentylglykolcarbonat und B Poly-ε-Caprolacton darstellen. X bezeichnet ein "getapertes" Übergangssegment aus Neopentylglykolcarbonat und ε-Caprolacton. Das Copolymerisat wurde durch ringöffnende anionsiche Copolymerisation von Neopentylglykolcarbonat und ε-Caprolacton erhalten. Das Gewichtsverhältnis der Monomeren Neopentylglykolcarbonat und ε-Caprolacton im Copolymerisat beträgt 10:90 (ermittelt durch $^1$H-NMR-Spektroskopie). Die relative Lösungsviskosität $\eta_{rel}$ des Polymeren beträgt 2,71 (2 Gew.-%ige Lösung in $CH_2Cl_2$ bei 20 °C).

C 2: C 1, Gewichtsverhältnis Neopentylglykolcarbonat:ε-Caprolacton = 30:70; $\eta_{rel}$ = 2,71 (2 Gew.-%ige Lösung in $CH_2Cl_2$ bis 20 ° C).

Die Mischungen (von A, B und C) wurden auf einer Walze bei 195 °C innerhalb von 5 Minuten hergestellt mit 0,5 Gew.-Teilen eines Silikonöls als Verarbeitungshilfe. Danach wurde das gebildete Walzfell bei 195 ° C zu Platten verpreßt, aus denen die Prüfkörper entnommen wurden.

In Tabelle 1 sind die Zusammensetzungen sowie die ermittelten Prüfdaten zusammengestellt.

| Prüfverfahren: | | |
|---|---|---|
| Zugfestigkeit | (MPa) | DIN 53 455 |
| Dehnung | (%) | DIN 53 455 |
| Weiterreißfestigkeit | (MPa) | DIN 53 515 |
| Shore-Härte | | DIN 53 505 |

**Tabelle 1** Zusammensetzungen und Prüfdaten der Formmassen

| Beispiel Nr. | A Gew.-Teile | B Gew.-Teile | C 1 Gew.-Teile | C 2 Gew.-Teile | Zugestig-keit MPa | Dehnung % | Weiterreiß-festigkeit MPa | Shore-Härte A/D |
|---|---|---|---|---|---|---|---|---|
| 1. | 50 | 50 | 20 | -- | 18,8 | 114 | 89 | 98/60 |
| 2. | 70 | 30 | 30 | -- | 15,8 | 253 | 51 | 96/39 |
| 3. | 50 | 50 | -- | 20 | 17,3 | 44 | 86 | 97/57 |
| 4. (Vergleich) | 50 | 50 | -- | -- | 11,1 | 55 | 69 | 100/71 |

## Patentansprüche

**1.** Polymermischungen mit hoher Zugfestigkeit und guter Weiterreißfestigkeit enthaltend

A) 10 bis 95 Gew.-Teile eines Pfropfpolymerisats aus 40 bis 85 Gew.-% eines teilchenförmigen hochvernetzten Dien- oder Alkylacrylatkautschuks und 60 bis 15 Gew.-% darauf pfropfpolymerisierter Alkylacrylate, Alkylmethacrylate, Acrylnitril, Methacrylnitril, Styrol, kernsubstituiertes Styrol, α-Methylstyrol, Maleinsäureanhydrid, N-substituiertem Maleinimid, Vinylacetat oder Mischungen daraus

B) 0 bis 75 Gew.-Teile eines thermoplastischen Polymerisats von Alkylacrylaten, Alkylmethacrylaten, Acrylnitril, Methacrylnitril, Styrol, α-Methylstyrol oder Mischungen daraus

C) 5 bis 60 Gew.-Teile eines Copolymeren mit sequenzartigem Aufbau der idealisierten Formel (I)

$(A - X - B)_n$ (I)

mit

n = 1 bis 20, wobei

A = Polymerisat eines cyclischen Carbonats der Formel (II) ("Block A")

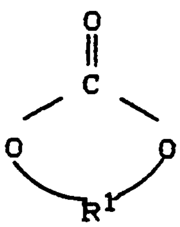 (II)

worin

$R^1$ = $-(CH_2)_n-$ mit n = 3-12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

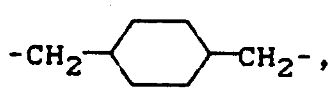, 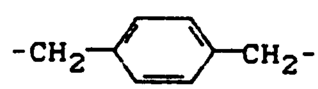,

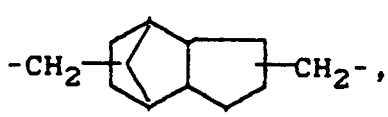,

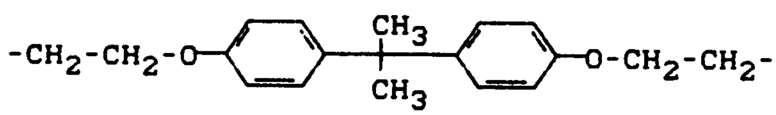,

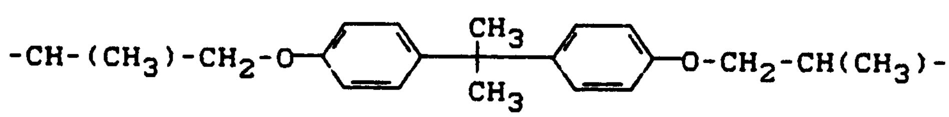,

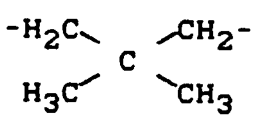, 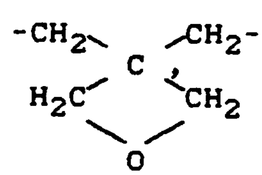

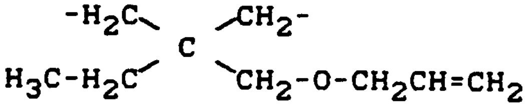, 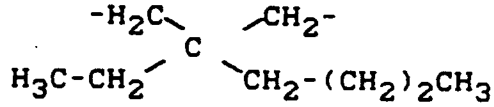

oder der Formel (III)

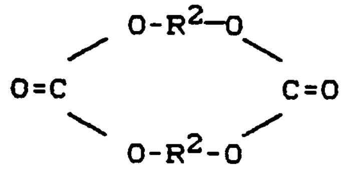

(III)

worin

$R^2$ = $-(CH_2)_n$ mit n = 4-12
$-CH_2CH_2OCH_2CH_2-$
$-CH_2CH_2OCH_2CH_2OCH_2CH_2-$

B = Polymerisat eines cyclischen Esters mit der Formel (IV) ("Block B")

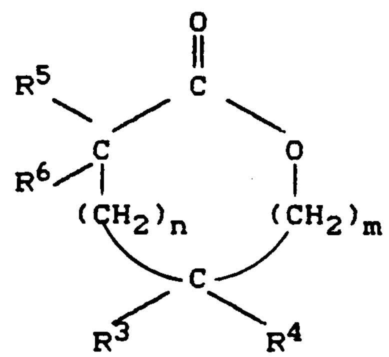

(IV)

mit

$R^3$, $R^4$, $R^5$, $R^6$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und

m, n unabhängig voneinander 0, 1, 2, 3, 4, 5 oder 6,

X = Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung auf -B- und die Konzentration der Struktureinheiten aus den Verbindungen (IV) in Richtung auf -A-kontinuierlich abnimmt ("tapered structure") und wobei der Gehalt an Blöcken A 1 bis 45 Gew.-% bezogen auf Gesamtmenge der Blöcke (A + B), der Gehalt an Blöcken B 99 bis 55 Gew.-% bezogen auf Gesamtmenge der Blöcke A + B), und der Gehalt an Mittelstücken X 5 bis 95 Gew.-%, bezogen auf Gesamtmenge A + B + X beträgt.

2. Polymermischungen nach Anspruch , enthaltend als C) ein durch anionische ringöffnende Polymerisation hergestelltes Polymerisat.

3. Polymermischungen nach Anspruch 1, enthaltend als C) ein Copolymeres aus 1-45 Gew.-% Neopentylglykolcarbonat und 99-55 Gew.-% ε-Caprolacton.

4. Verwendung von Polymermischungen nach Anspruch 1 zur Herstellung von flexiblen Folien mit hoher Zugfestigkeit und Weiterreißfestigkeit.

**Claims**

1. Polymer compositions having high tensile strength and good tear resistance, which contain
A) from 10 to 95 parts by weight of a graft polymer composed of from 40 to 85 wt-% of a particulate highly cross-linked diene rubber or alkylacrylate rubber and from 60 to 15 wt-% of alkylacrylates, alkylmethacrylates, acrylonitrile, methacrylonitrile, styrene, nucleus- substituted styrene, α-methylstyrene, maleic anhydride, N-substituted maleimide, vinyl acetate or mixtures thereof graft-polymerised on to the said rubber

B) from 0 to 75 parts by weight of a thermoplastic polymer of alkylacrylates, alkylmethacrylates, acrylonitrile, methacrylonitrile, styrene, α-methylstyrene or mixtures thereof

C) from 5 to 60 parts by weight of a copolymer of sequenced structure to the idealised formula (I)

$(A - X - B)_n$ (I)

having n = 1 to 20, where

A = polymer of a cyclic carbonate of the formula (II) ("block A")

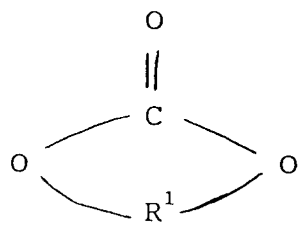

(II)

wherein

$R^1$ = $-(CH_2)_n-$ having n = 3 to 12,

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

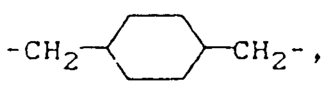 , 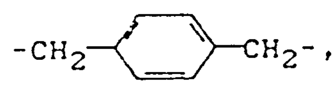 ,

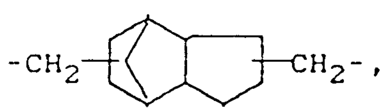 ,

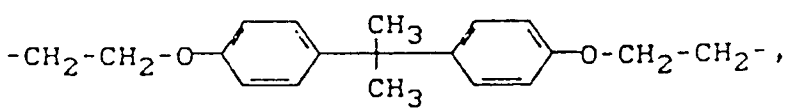 ,

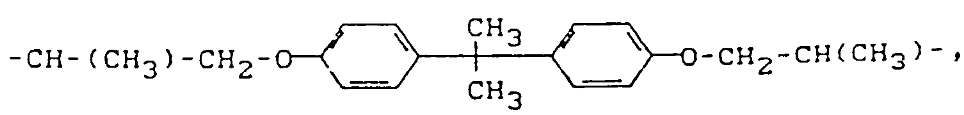 ,

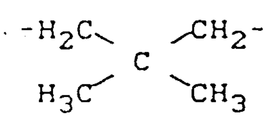 , 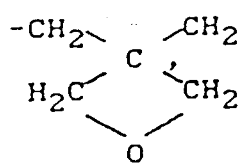

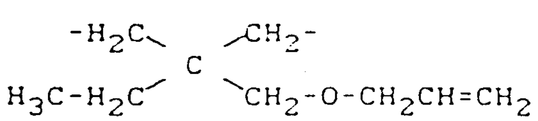 , 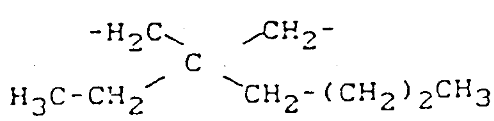

or of the formula (III)

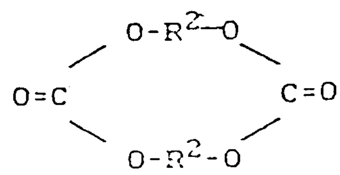

(III)

wherein

R² = $-(CH_2)_n$ having n = 4 to 12
$-CH_2CH_2OCH_2CH_2-$
$-CH_2CH_2OCH_2CH_2OCH_2CH_2-$

B = polymer of a cyclic ester having the formula (IV) ("block B")

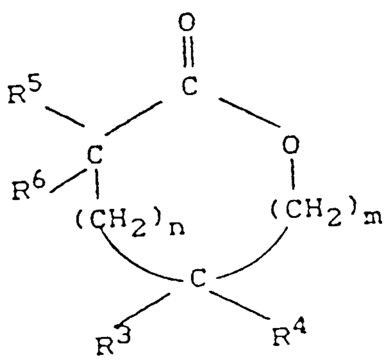

(IV)

in which

$R^3$,$R^4$,$R^5$,$R^6$ = H, $C_1C_6$-alkyl, $C_3$-$C_6$-alkenyl, $C_1C_6$-alkoxy, $C_1C_6$-alkenoxy-$C_1C_6$-alkyl, especially H, $CH_3$, $C_2H_5$ and

m,n independently of one another are 0, 1, 2, 3, 4, 5 or 6,

X = a central section, containing both the cyclic carbonate of the formula (II) and/or (III) and also the cyclic ester of the formula (IV) in polymerised form, whereby the concentration of the structural units composed of compounds (II) and/or (III) continuously declines on approaching -B- and the concentration of the structural units composed of the compounds (IV) continuously declines on approaching -A- ("tapered structure") and whereby the block A content is from 1 to 45 wt-%, calculated on the total quantity of blocks (A + B), the block B content is from 99 to 55 wt-%, calculated on the total quantity of blocks (A + B), and the content of central section X is from 5 to 95 wt-%, calculated on the total quantity A + B + X.

**2.** Polymer compositions according to Claim 1, containing as C) a polymer prepared by anionic ring-opening polymerisation.

**3.** Polymer compositions according to Claim 1, containing as C) a copolymer of from 1 to 45 wt-% neopentylglycol carbonate and from 99 to 55 wt-% ε-caprolactone.

**4.** Use of polymer compositions according to Claim 1 for the preparation of flexible foils having high tensile strength and tear resistance.

## Revendications

**1.** Mélange de polymères ayant une grande résistance à la traction et une bonne résistance à la rupture d'une éprouvette entaillée, ces mélanges contenant

A) 10 à 95 parties en poids d'un copolymère greffé formé de 40 à 85 % en poids d'un caoutchouc de diène ou d'acrylate d'alkyle hautement réticulé, sous forme de particules, et de 40 à 15 % en poids d'acrylates d'alkyles, de méthacrylates d'alkyles, d'acrylonitrile, de méthacrylonitrile, de styrène, de styrène substitué sur le noyau, d'α-méthylstyrène, d'anhydride de l'acide maléique, de maléinimide substitué sur l'azote, d'acétate de vinyle ou de leurs mélanges, polymérisés par

greffage sur les particules ci-dessus ;

B) 0 à 75 parties en poids d'un polymère thermoplastique d'acrylates d'alkyles, de méthacrylates d'alkyles, d'acrylonitrile, de méthacrylonitrile, de styrène, d'$\alpha$-méthylstyrène ou de leurs mélanges,

C) 5 à 60 % en poids d'un copolymère à structure séquencée, répondant à la formule idéalisée (I)

$(A\text{-}X\text{-}B)_n$ (I)

dans laquelle

n = 1 à 20, et

A représente le polymère d'un carbonate cyclique de formule (II) ("Bloc A")

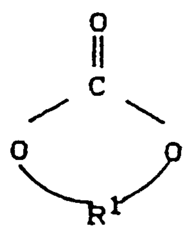

(II)

formule dans laquelle

$R^1$ représente $-(CH_2)_n-$ avec n = 3-12

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

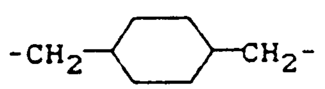

,

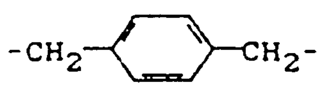

,

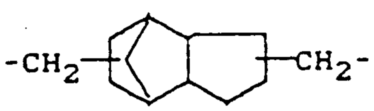

,

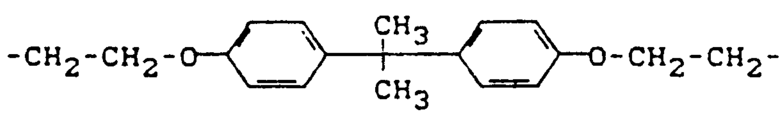

,

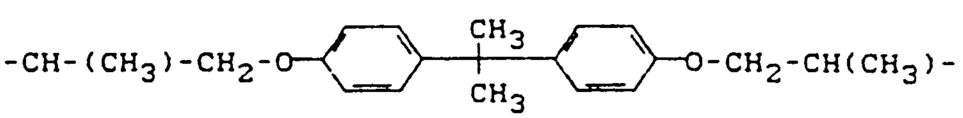

,

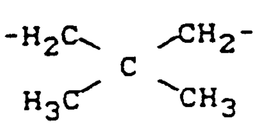

,

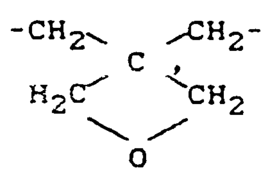

,

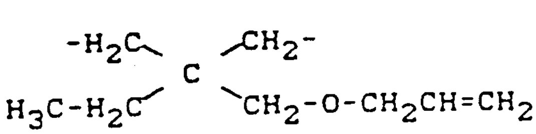

,

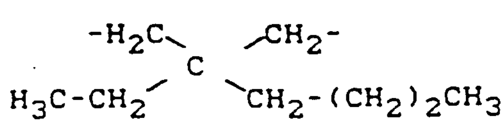

ou de formule (III)

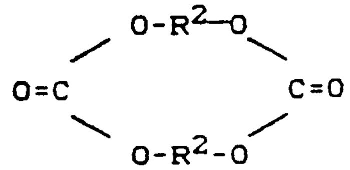

(III)

formule dans laquelle

$R^2$ représente $-(CH_2)_n$ avec n = 4-12

$-CH_2CH_2OCH_2CH_2-$

$-CH_2CH_2OCH_2CH_2OCH_2CH_2-$

B : Polymère d'un ester cyclique de formule (IV) ("Bloc B")

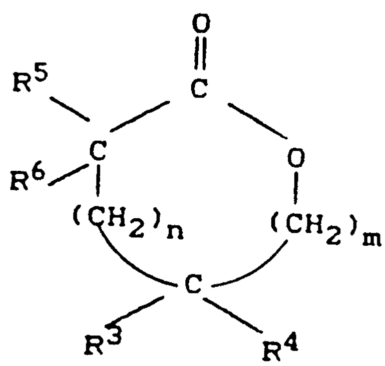

(IV)

formule dans laquelle

$R^3$, $R^4$, $R^5$, $R^6$ représentent chacun H, un groupe alkyle en $C_1$-$C_6$, alcényle en $C_3$-$C_6$, alcoxy en $C_1$-$C_6$, alcénoxy (en $C_1$-$C_6$)-alkyle (en $C_1$-$C_6$), notamment H, $CH_3$, $C_2H_5$, et

m et n valent chacun, indépendemment l'un de l'autre 0, 1, 2, 3, 4, 5 ou 6,

X est un chaînon médian ou intermédiaire, contenant aussi bien le carbonate cyclique de formule (II) et/ou (III) que, également, l'ester cyclique de formule (IV) sous forme polymérisée, la concentration des motifs structurels formés à partir des composés (II) et/ou (III) diminuant continuellement dans le sens de - B) et la concentration des motifs structurels formés à partir des composés (IV) diminuant continuellement dans le sens -A- ("tapered structure"), et la teneur en les blocs A représentant 1 à 45 % en poids, par rapport à la quantité totale des blocs (A + B), la teneur en les blocs B représentant 99 à 55 % en poids, par rapport à la quantité totale des blocs (A + B), et la teneur en les chaînons intermédiaires ou médians X représentant 5 à 95 % en poids, par rapport à la quantité totale (A + B + X).

**2.** Mélange de polymères selon la revendication 1, contenant, comme constituant (C), un polymère obtenu par polymérisation anionique avec ouverture de cycle(s).

**3.** Mélange de polymères selon la revendication 1, contenant, à titre de constituant (C), un copolymère formé de 1 à 45 % en poids de carbonate de néopentylglycol et de 99 à 55 % en poids d'ε-caprolactone.

**4.** Utilisation de mélanges de polymères selon la revendication 1, pour fabriquer des feuilles flexibles présentant une grande résistance à la traction et une bonne résistance à la rupture d'une éprouvette entaillée.